Europäisches Patentamt

European Patent Office

Office européen des brevets

(11) Veröffentlichungsnummer: **0 231 477**
A2

## (12) EUROPÄISCHE PATENTANMELDUNG

(21) Anmeldenummer: 86116851.6

(22) Anmeldetag: 04.12.86

(51) Int. Cl.4: **C08L 95/00** , **C08L 57/00** , //C08K5/17,C08L63/00

(30) Priorität: 30.01.86 DE 3602811

(43) Veröffentlichungstag der Anmeldung:
12.08.87 Patentblatt 87/33

(84) Benannte Vertragsstaaten:
AT DE ES FR

(71) Anmelder: **PCI Polychemie GmbH Augsburg**
**Piccardstrasse 10**
**D-8900 Augsburg 1(DE)**

(72) Erfinder: **Psader, Josef**
**Johann-Sebastian-Bach-Strasse 12**
**D-8901 Neusäss(DE)**
Erfinder: **Huber, Manfred**
**Donauwörther Strasse 36**
**D-8901 Königsbrunn(DE)**
Erfinder: **Herdlicka, Alwin, Dipl.-Chem.**
**Lilienthalstrasse 4**
**D-8900 Augsburg(DE)**

(74) Vertreter: **Hansen, Bernd, Dr.rer.nat. et al**
**Hoffmann, Eitle & Partner Patentanwälte**
**Arabellastrasse 4**
**D-8000 München 81(DE)**

(54) **Mischung, enthaltend eine Bitumenemulsion und ein Aminhärtungsmittel für Epoxidharze, Verfahren zu deren Herstellung und deren Verwendung zum Abmischen mit Epoxidharzen.**

(57) Die Erfindung betrifft eine Mischung enthaltend eine Bitumenemulsion und ein Aminhärtungsmittel für Epoxidharze, die dadurch gekennzeichnet ist, daß sie (1) 5 bis 95 Gew.-Teile einer 30 bis 80 gew.-%igen wäßrigen anionischen Bitumenemulsion, und (2) 95 bis 5 Gew.-Teile eines Aminhärtungsmittels für Epoxidharze enthält, sowie gegebenenfalls (3) bis zu 50 Gew.-Teile, bezogen auf die Bitumenemulsion und das Aminhärtungsmittel einer wäßrigen organischen Polymerdispersion, und die besonders als Zusatz zu Epoxidharzen geeignet ist.

EP 0 231 477 A2

## Mischung, enthaltend eine Bitumenemulsion und ein Aminhärtungsmittel für Epoxidharze, Verfahren zu deren Herstellung und deren Verwendung zum Abmischen mit Epoxidharzen

Die Erfindung betrifft eine Mischung, die eine wäßrige, anorganische Bitumenemulsion und Aminhärtungsmittel für Epoxidharze enthält. Sie betrifft weiterhin die Verwendung einer solchen Mischung als Zusatz zu Epoxidharzen.

Epoxidharze in Form von wasseremulgierbaren kalthärtenden Epoxidharzsystemen, die neben dem Epoxidharz ein Aminhärtungsmittel enthalten, werden in großem Umfang für Schutzanstriche verwendet. Solche Anstriche können durch Streichen, Walzen oder Spritzen aufgetragen werden. Wasseremulgierbare Epoxidharze haben den Vorteil, daß sie lösungsmittel-und geruchsfrei sind. Der Schwund beim Härten ist nur gering und die Überzüge können spannungsfrei aushärten und weisen dann eine hohe Schlagzähigkeit und Abriebfestigkeit auf. Sie haften auch gut an den meisten Werkstoffen, insbesondere Metallen.

Wasseremulgierbare Epoxidharze haben den Nachteil, daß sie hydrophil sind. Außerdem liegen sie preislich verhältnismäßig hoch.

Es ist bekannt, daß man Epoxidharze mit Elastomeren modifizieren kann, um dadurch die Schlagzähigkeit etc. entsprechend den jeweiligen Anwendungsbedingungen zu modifizieren.

Aus der JA-OS 57-76051 ist ein kationisches emulgiertes und härtbares Bitumen-Epoxid-Präparat bekannt. Die bekannte Zusammensetzung besteht aus einem bituminösen Material, einem kationisierten Härter für Epoxidharze und einer Epoxidverbindung. Zu ihrer Herstellung ist es erforderlich, eine Bitumenschmelze mit einem kationisierten Aminhärtungsmittel zu vermischen und diese Mischung kann dann einem Epoxidharz zugesetzt werden.

Bekannt ist weiterhin, daß man Epoxidharze mit Bitumen vermischen kann, wobei wegen der begrenzten Verträglichkeit von Epoxidharzen und Bitumen organische Lösungsmittel erforderlich sind. Der Nachteil solcher Mischungen besteht in der Verwendung der organischen Lösungsmittel, die beim Abdampfen die Umwelt belasten. Außerdem können lösungsmittelhaltige Epoxid-Bitumen-Mischungen nur in verhältnismäßig geringen Schichten angewendet werden, wobei wegen des Lösungsmittels und der damit verbundenen Entzündungsgefahr erhebliche Vorsichtsmaßnahmen erforderlich sind.

Aufgabe der Erfindung ist es, eine Mischung aus einer wäßrigen Bitumenemulsion und einem Aminhärtungsmittel für Epoxidharze zur Verfügung zu stellen, die leicht und preiswert herzustellen ist und als Zusatz zu Epoxidharzen verwendet werden kann und dann Produkte mit verbesserten Verarbeitungseigenschaften und physikalischen Eigenschaften ergibt.

Diese Aufgabe wird durch eine Mischung gemäß dem Patentanspruch 1 gelöst.

Das Wesen der Erfindung liegt in der Verwendung einer wäßrigen anionischen Bitumenemulsion. Im Gegensatz zum Stand der Technik, wo eine wäßrige Bitumenemulsion verwendet wurde, die mit einem kationischen Aminhärtungsmittel abgemischt war, wird gemäß der vorliegenden Erfindung eine anionische Bitumenemulsion verwendet. Die Bitumenemulsion hat einen Bitumengehalt von 30 bis 80 und vorzugsweise 50 bis 70 Gew.-%. Bitumenemulsionen werden dadurch erhalten, daß heißes Bitumen mit anioschen Emulgator enthaltendem Wasser vermischt wird. Geeignete anionische Emulgatoren sind z.B. Tenside:
Alkansulfonate, Olefinsulfonate,
Alkylbenzolsulfonate, Ethersulfate,
Alkylnaphthalinsulfonate.

Zu der anionischen Bitumenemulsion wird ein Aminhärtungsmittel, wie es üblicherweise zum Härten von Epoxidharzen verwendet wird, zugemischt, wobei die Menge des Aminhärtungsmittels im Bereich von 5 bis 95 Gew.-Teile, bezogen auf die wäßrige Bitumenemulsion, beträgt. Geeignete Aminhärtungsmittel sind beispielsweise Polyaminoamide der Viskosität 13000 bis 23000 mPas und Aminzahl 160 oder Polyaminoamide der Viskosität 18000 mPas und Aminzahl 1400.

Die Art des verwendeten Aminhärtungsmittels ist bei der vorliegenden Erfindung nicht kritisch und kann dem jeweiligen Epoxidharz und dessen beabsichtigter Verwendung in einer für den Fachmann geläufigen Weise angepaßt werden.

Die erfindungsgemäße Mischung aus der wäßrigen anionischen Bitumenemulsion und dem Aminhärtungsmittel für Epoxidharze kann zusätzlich noch mit Dispersionen von organischen Polymeren verschnitten werden. Geeignete Dispersionen von organischen Polymeren sind solche auf Basis von Styrol, Acrylsäureestern, Methacrylsäureestern, Butadien und Vinylestern. Besonders geeignet sind insbesondere wäßrige Kunststoffdispersionen, die Polyacrylsäureester enthalten, beispielsweise Polyacrylatdispersionen auf Basis von Acrylsäureestern mit 1 bis 6 Kohlenstoffatomen in der Alkoholkomponente. Auch die entsprechenden Methacrylsäureester oder Copolymere von Acrylsäure-und Methacrylsäureestern sind als Zusatzmittel geeignet, ebenso auch Mischungen von verschiedenen Acrylatdispersionen. Weitere Polymerdispersionen, die erfindungsgemäß zugegeben werden können, sind solche auf Basis von Vinylacetat und Vinylpropionat sowie auch solche auf Basis von Butadienhomo-und -copolymeren. Die Menge des gegebenenfalls zuzumischenden polymeren Bindemittels der vorgenannten Art richtet sich nach der späteren Verwendung des Epoxidharzes. Sie kann im Bereich von 10 bis 90 %, bezogen auf die Menge der Bitumenemulsion mit dem Aminhärtungsmittel liegen.

Die erfindungsgemäßen Mischungen können Füllstoffe, wie sie für Epoxidharze üblich sind, enthalten, beispielsweise Calciumcarbonat. Die Menge der Füllstoffe richtet sich gleichfalls nach der späteren Verwendung des Epoxidharzes. Sie liegt im allgemeinen im Bereich von 10 bis 90 %, bezogen auf die wäßrige Bitumenemulsion mit dem Härtungsmittel.

Bei der erfindungsgemäßen Verwendung der wäßrigen anionischen Bitumenemulsion mit dem Aminhärtungsmittel gibt man diese Mischung zu dem Epoxidharz und vermischt die Zusammensetzung gut.

Die anionische Bitumenemulsion enthält ein Bitumen, welches bei der Erdöldestillation anfällt. Derartige Bitumen entsprechen B65 bis B200 nach DIN 1995.

Auch die Epoxidharze, zu denen die das Aminhärtungsmittel enthaltende anionische wäßrige Bitumenemulsion zugegeben wird, sind die üblichen. Das am meisten verwendete Epoxidharz setzt sich aus Epichlorhydrin und Bisphenol A zusammen, jedoch können alle Epoxidharze, die mit einem Aminhärtungsmittel gehärtet werden, verwendet werden. Dabei kann man die erfindungsgemäße Bitumenemulsion in Mengen bis zu 90 Gew.-%, bezogen auf das Epoxidharz, verwenden. Vorzugsweise wird die Bitumenemulsion in Mengen von 200 bis 700 Gew.-Teilen und insbesondere 300 bis 600 Gew.-Teilen, bezogen auf 100 Gew.-Teile Epoxidharz, eingesetzt.

Die erfindungsgemäßen Mischungen ermöglichen es, bei ihrer Verwendung als Zusatz zu Epoxidharzen diesen in Kombination solche Eigenschaften zu verleihen, wie sie einerseits Bitumenemulsionen und andererseits Epoxidharzen eigen sind. Durch den Zusatz der anionischen Bitumenemulsion erzielt man eine verbesserte Wasser-, Wasserdampf-und Kohlendioxiddichtheit, ein verbessertes Dehnungsverhalten sowie eine erhöhte Alterungsbeständigkeit und Plastizität. Die Hydrophobie wird verbessert und das Fließen bei höheren Temperaturen, das für Bitumenemulsionen typisch ist, weitgehend verhindert.

Beispiel 1

Komponente I 100 Gew.-Teile Epoxidharz auf Bisphenol A-Basis
(Viskosität 25°C) ca. 3000 mPas
Epoxidwert ca. 0,52

Komponente II 120 Gew.-Teile Aminhärtungsmittel
(Viskosität 25°C)
13 000 bis 23 000 mPas
Aminzahl ca. 160
100 Gew.-Teile Wasser
200 Gew.-Teile 66 %ige wäßrige anionische Bitumenemulsion

Mischungsverhältnis Komponente I zu Komponente II 100 : 420 Gew.-Teile

Beispiel 2

Komponente I 100 Gew.-Teile Epoxidharz
(Viskosität 25°C) ca. 3000 mPas
Epoxidwert ca. 0,52

Komponente II 120 Gew.-Teile Aminhärtungsmittel
(Viskosität 25°C)
13 000 bis 23 000 mPas
Aminzahl ca. 160

100 Gew.-Teile Wasser
400 Gew.-Teile wäßrige anionische Bitumenemulsion, 60 %ig

Mischungsverhältnis Komponente I zu Komponente II 100 : 620 Gew.-Teile

Beispiel 3

Komponente I 100 Gew. Teile Epoxidharz
(Viskosität 25°C) ca. 3000 mPas
Epoxidwert ca. 0,52

Komponente II 100 Gew.-Teile Aminhärtungsmittel
(Viskosität 25°C) 18 000 mPas
Aminzahl ca. 140
100 Gew.-Teile Calciumcarbonat
100 Gew.-Teile Wasser
50 Gew.-Teile wäßrige anionische Bitumenemulsion, 66 %ig

Mischungsverhältnis Komponente I zu Komponente II 100 : 350 Gew.-Teile

Beispiel 4

Komponente I 100 Gew.-Teile Epoxidharz
(Viskosität 25°C) ca. 3000 mPas
Epoxidwert ca. 0,52

Komponente II 120 Gew.-Teile Aminhärter
(Viskosität 25°C)
13 000 bis 23 000 mPas
Aminzahl ca. 160
200 Gew.-Teile Bitumenemulsion, 66 %ig
100 Gew.-Teile einer Acrylatdispersion mit einem Feststoffgehalt von
100 Gew.-Teile Calciumcarbonat

Mischungsverhältnis von Komponente I zu Komponente II 100 : 670 Gew.-Teile

Die mit den erfindungsgemäßen wäßrigen Bitumenemulsionen erzielten Epoxidharzprodukte zeigen gegenüber nicht mit Bitumen ausgerüsteten Epoxidharzen erhebliche Vorteile. Der Wasserdampf-Diffusionswiderstand wird verbessert, d.h. die Durchlässigkeit erhöht. Ebenso wird die Flexibilität (Verformbarkeit) gegenüber den nicht verschnittenen Produkten verbessert und auch die Haftung auf Metall.

| Eigenschaften | reines System Epoxidharz/ | Beispiele | | | |
|---|---|---|---|---|---|
| | Aminhärter | 1 | 2 | 3 | 4 |
| Wasserdampf-diffusionswider-standsfaktor $\mu$ | ca. 800 | ca.1200 | ca.1500 | ca.1000 | ca.900 |
| Flexibilität | spröde | flexibel | flexibel | flexibel | sehr flexibel |
| Haftung auf Metall (Gitterschnitt-methode) | brauchbar | sehr gut | sehr gut | sehr gut | sehr gut |

## Ansprüche

1. Mischung enthaltend

eine Bitumenemulsion und ein Aminhärtungsmittel für Epoxidharze, dadurch **gekennzeichnet** , daß sie (1) 5 bis 95 Gew.-Teile einer 30 bis 80 gew.-%igen wäßrigen anionischen Bitumenemulsion, und (2) 95 bis 5 Gew.-Teile eines Aminhärtungsmittels für Epoxidharze enthält, sowie gegebenenfalls (3) bis zu 50 Gew.-Teile, bezogen auf die Bitumenemulsion und das Aminhärtungsmittel einer wäßrigen organischen Polymerdispersion.

2. Mischung gemäß Anspruch 1, dadurch **gekennzeichnet** , daß die wäßrige anionische Bitumenemulsion eine Konzentration von 40 bis 70 Gew.-% hat.

3. Mischung gemäß Ansprüchen 1 oder 2, dadurch **gekennzeichnet** , daß die Komponente (3) eine Dispersion aus Polymeren auf Basis von Styrol, Acrylsäureestern, Methacrylsäureestern, Butadien und/oder Vinylestern ist.

4. Verfahren zur Herstellung einer Mischung gemäß Anspruch 1, dadurch **gekennzeichnet**, daß man eine anionische wäßrige Bitumenemulsion mit einem Aminhärtungsmittel im Verhältnis von 20:1 bis 1:20 mischt.

5. Verwendung einer Mischung gemäß Ansprüchen 1 bis 4 als Zusatz zu Epoxidharzen.